Europäisches Patentamt

European Patent Office

Office européen des brevets

(11) Publication number: **0 238 310 B1**

(12) **EUROPEAN PATENT SPECIFICATION**

(45) Date of publication of patent specification: **17.07.91**  (51) Int. Cl.⁵: **F16H 59/00, B60K 41/06**

(21) Application number: **87302276.8**

(22) Date of filing: **17.03.87**

(54) **Apparatus for controlling an automatic gear transmission.**

(30) Priority: **17.03.86 JP 59013/86**
**17.03.86 JP 59014/86**

(43) Date of publication of application:
**23.09.87 Bulletin 87/39**

(45) Publication of the grant of the patent:
**17.07.91 Bulletin 91/29**

(84) Designated Contracting States:
**DE FR GB SE**

(56) References cited:
**EP-A- 0 108 572**
**EP-A- 0 142 046**
**GB-A- 1 322 579**
**GB-A- 2 030 661**
**US-A- 3 713 351**

(73) Proprietor: **Isuzu Motors Limited**
**6-22-10 Minamiooi Shinagawa-ku**
**Tokyo 140(JP)**

Proprietor: **FUJITSU LIMITED**
**1015, Kamikodanaka Nakahara-ku**
**Kawasaki-shi Kanagawa 211(JP)**

(72) Inventor: **Yoshimura, Hiroshi**
**24-25 Kamio 2-chome, Midori-ku**
**Yokohama-shi Kanagawa(JP)**
Inventor: **Iida, Youichi**
**Inamo-Haitsu 101, 267-5 Nakasawada**
**Numadu-shi Shizuoka(JP)**

(74) Representative: **Brunner, Michael John et al**
**GILL JENNINGS & EVERY 53-64 Chancery**
**Lane**
**London WC2A 1HN(GB)**

Rank Xerox (UK) Business Services

## Description

This invention relates to apparatus for controlling an automatic gear transmission, for example for a motor vehicle.

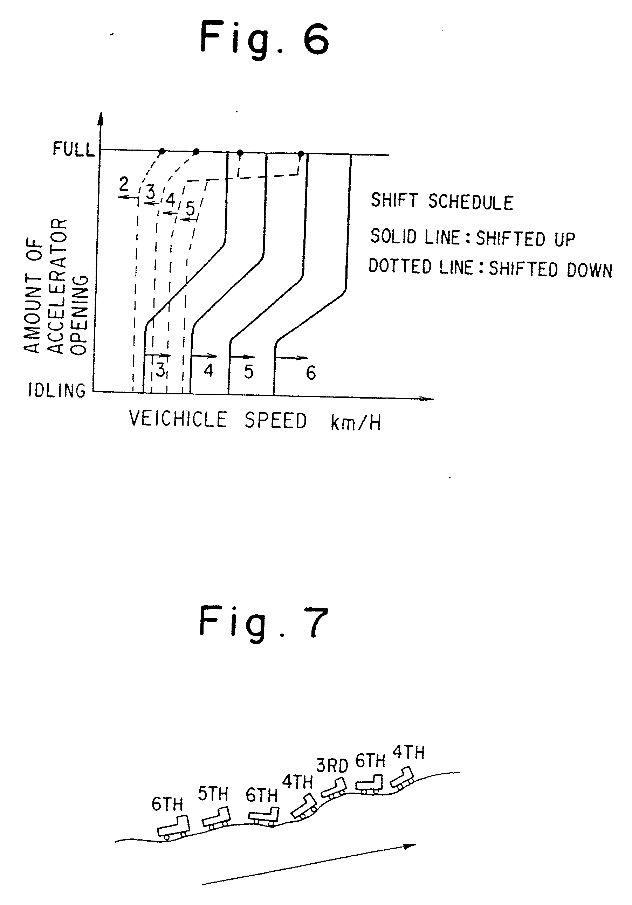

The logic for controlling a conventional electronically-controlled automatic gear transmission is based on a shift schedule determined from vehicle speeds and the amount of opening of a throttle valve (hereinafter referred to as the amount of accelerator opening) based on the depth to which an accelerator pedal is depressed, as shown in Figure 6 of the accompanying drawings. Figure 6 shows, by way of example, a shift map, indicating a shift-up schedule by solid lines and a shift-down schedule by dotted lines.

The motor vehicle can run stably on a flat road or a road with a relatively uniform gradient by controlling the gear changing based on the above shift schedule.

When the motor vehicle runs on a road with a non-uniform gradient which varies frequently, for example when the motor vehicle runs uphill as illustrated in Figure 7, the transmission gears must be repeatedly shifted up and down. A large motor vehicle, in particular, may not be driven uphill with the gears in the D range, i.e. the automatic gear shifting range.

More specifically, with a conventional shift schedule arranged in accordance with conventional logic, when the running condition varies (for example, the amount of depression of the accelerator pedal is reduced or the vehicle speed is increased), the gear transmission is shifted up on the basis of the shift map, even if the engine output is not sufficient in the gear position to which the transmission is shifted up. Since the engine output is insufficient in the selected gear position, the vehicle speed is lowered, and hence the gear transmission shifts down. Hence, the gear transmission is repeatedly shifted up and down.

According to the shift schedule based on the shift map shown in Figure 6, the gear transmission is not shifted down unless the vehicle speed is reduced. This transmission control tends to irritate the driver, increases the time required to uphill, or fails to utilise the engine power fully, resulting in a reduction in the power performance of the engine.

One solution which has been employed has been to provide a manual gear range separately, and to allow the driver to select an optimum gear position. This arrangement is, however, problematic in that the required gear changing operation is cumbersome and the merits of the automatic gear transmission are lost.

GB-A-2030661 discloses a transmission shift control device comprising a throttle-opening sensor and an engine speed sensor which provide signals to a control which utilises a shift map to determine the optimum gear position.

An object of the present invention is to provide apparatus for controlling an automatic gear transmission which is capable of automatically selecting an optimum gear position according to the resistance to running of a motor vehicle.

According to a first aspect of the invention, apparatus for controlling an automatic gear transmission in a motor vehicle by commanding an optimum gear position thereof based on the speed of travel of the vehicle and the amount of accelerator opening thereof, comprises a control circuit, characterised by:

first computing means for computing an engine output for the optimum gear position if the optimum gear position requires a shift-up from the present gear position; second computing means for computing the running resistance of the vehicle for the optimum gear position; comparison means for comparing the computed engine output and the computed running resistance; and, command modifying means for inhibiting a shift-up to the optimum gear position if the running resistance is larger than the engine output based on the result of the comparison effected by the comparison means.

According to a second aspect of the invention, apparatus for controlling an automatic gear transmission in a motor vehicle by commanding an optimum gear position thereof based on the speed of travel of the vehicle and the amount of accelerator opening thereof, comprises a control circuit characterised by:

first computing means for computing an engine output for the present gear position if the optimum gear position is the present gear position; second computing means for computing the running resistance of the vehicle for the present gear position; comparison means for comparing the computed engine output and the computed running resistance; and, command modifying means for modifying the optimum gear position into a lower gear position and for commanding a shift-down if the running resistance is larger than the engine output based on the result of comparison effected by the comparison means.

Embodiments of the invention will now be described, by way of example, with reference to the accompanying drawings, in which

Figure 1 is a block diagram of apparatus for controlling an automatic gear transmission according to an embodiment of the invention;

Figure 2 is a flowchart of operation of the controlling apparatus shown in Figure 1;

Figure 3 is a graph of running performance for explaining a transmission control logic used in an embodiment of the invention;

Figure 4 is a flowchart of a transmission control according to another embodiment of the invention;

Figure 5 is a graph of running performance, for explaining a transmission control logic used in another embodiment of the invention;

Figure 6 is a diagram illustrating a shift schedule map; and

Figure 7 is a diagram showing gears selected in a motor vehicle running on a road having a non-uniform gradient.

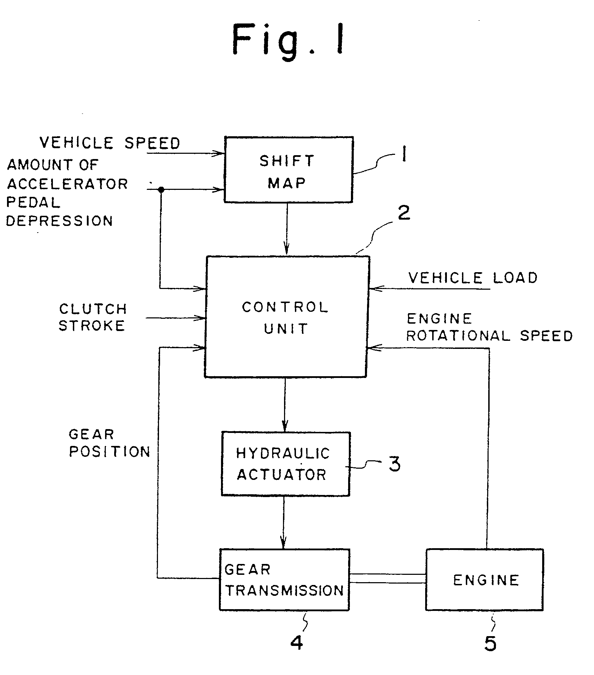

As shown in Figure 1, apparatus for controlling an automatic gear transmission according to an embodiment of the invention includes a shift map 1 for determining an optimum gear position based on a motor vehicle road speed and the amount of accelerator opening. A command signal from the shift map 1 is applied to a control unit 2. The control unit 2 is responsive to the command signal from the shift map 1 for applying a transmission control command signal to means, such as a hydraulic actuator 3, to control the operation of a gear transmission 4, and also for applying a control signal to a clutch actuator which operates a clutch (not shown). The control unit 2 includes a first arithmetic unit for computing the output of an engine 5 at a gear position determined by the shift map 1, based on an equation which will be described later. The control unit 2 is supplied with a signal indicative of the rotational speed of the engine 5, a gear position signal, a clutch stroke signal, and other signals. The control unit 2 also includes a second arithmetic unit for computing the running resistance, i.e. the resistance to running of the motor vehicle, from a vehicle load signal applied thereto. The unit 2 also includes a comparator for comparing the engine output and the running resistance thus computed, and another comparator for determining whether the accelerator opening signal is higher than a prescribed value.

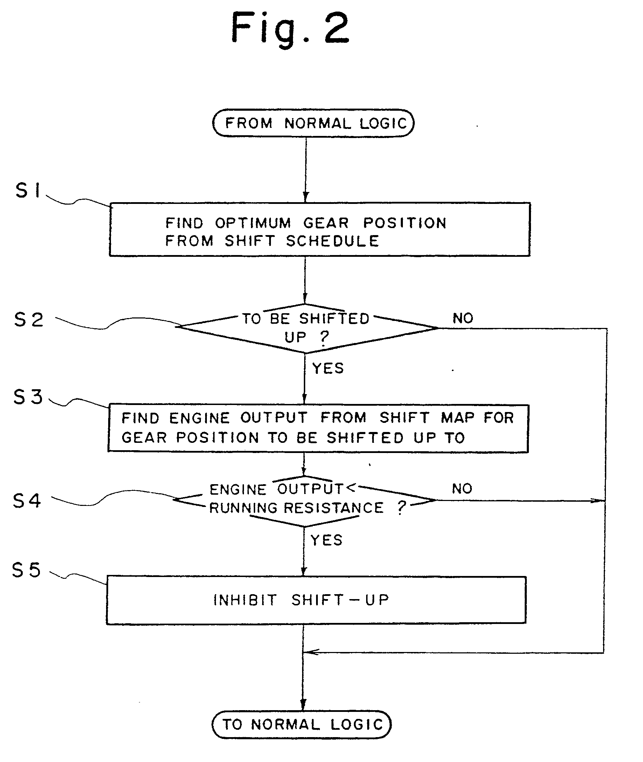

Figure 2 shows a flowchart representative of an embodiment of a transmission control logic in the control unit 2.

Firstly, from a normal logic circuit an optimum gear position is determined in a step S1 from a shift schedule determined by the vehicle speed and the amount of accelerator opening.

Then, a step S2 ascertains whether the gear position selected by the normal logic is a shift-up from the present gear position. If "NO", then the present gear position selected by the normal logic is maintained. If "YES", then an engine output for the gear position to be shifted up to is found in a step S3 from the shift map 1 stored in a memory in the control unit 2. The engine output and the running resistance are compared in a step S4. If the engine output is larger than the running resistance, then the transmission is shifted up to the gear position to be reached according to the normal logic. If the engine output for the gear position to be shifted up to is smaller than the running resistance for the same gear position, then a gear shift-up is inhibited in a step S5, and the gear position selected according to the normal logic is maintained.

The running resistance is computed from the following equation:

$$Pmer = Pme - A \times \frac{W}{Vs} \times \left(\frac{R}{\mu f}\right)^2 \times \left(\frac{1}{\mu Ti}\right)^2 \times \frac{\Delta Ne}{\Delta t}$$

where
Pmer is the engine output corresponding to the running resistance,
Pme is the engine output,
A is a constant,
Vs is the total displacement of the engine,
W is the weight of the vehicle,
$\mu f$ is the final ratio,
R is the radius of the tyres,
$\mu Ti$ is the transmission gear ratio, and
$\Delta Ne/\Delta t$ is the change in the engine rotational speed in a time $\Delta t$.

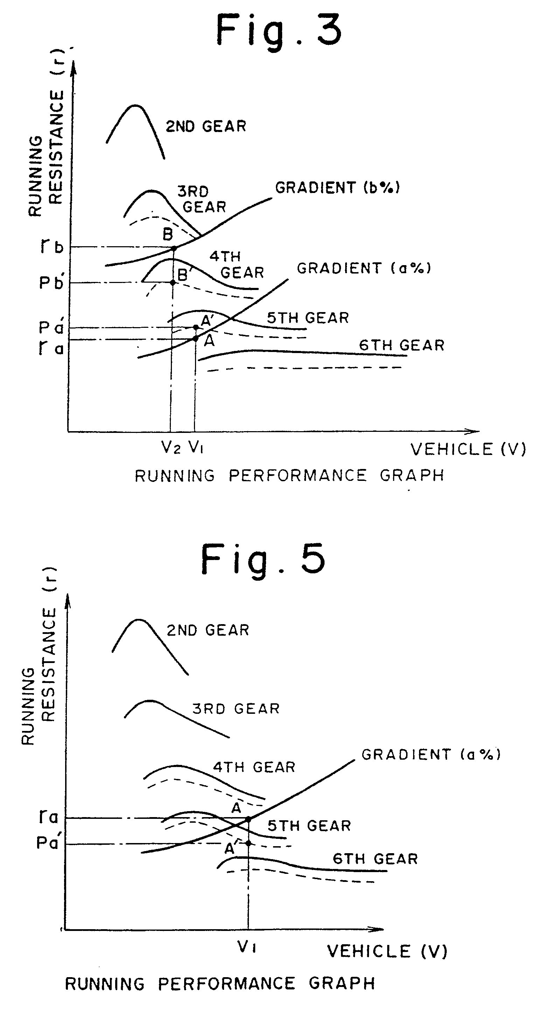

Determination and correction of the gear shift-up according to the present embodiment will be described in more detail based on the running performance diagram of Figure 3.

The running resistance when the motor vehicle runs at a speed V1 on a road having a gradient a% (point A) is ra, and it is assumed that the motor vehicle is running under this condition with the gear transmission in the 4th gear position, selected by the normal logic. If the amount of accelerator opening is reduced, or the vehicle speed is increased relative to the speed V1, determination as to whether the motor vehicle should still run with the 4th gear selected or whether the gear transmission should be shifted up to allow the vehicle to run in the 5th gear position is carried out by comparing with the running resistance ra a maximum engine output Pa' (which is of a value obtained by subtracting a marginal engine output from an actual maximum engine output) for the 5th gear position to be shifted up to. Since Pa' > ra in this case, it is possible for the motor vehicle to run at the speed V1 even when the gear transmission is shifted up to 5th gear. The time required for the motor vehicle to run uphill is reduced by selecting the 5th gear position. Therefore, the gear transmission is shifted up to the 5th gear position.

The running resistance when the motor vehicle runs at a speed V2 on a road having a gradient b% (point B) is rb, and it is assumed that the motor vehicle is running under this condition with the gear transmission in the 3rd gear position selected by the normal logic. Determination as to whether the motor vehicle should still run with the 3rd gear position or the gear transmission should be shifted up to 4th gear position is carried out by comparing a maximum engine output Pb' for the 4th gear position with the running resistance rb. Since Pb' < rb in this case, the shift-up is inhibited, and the gear transmission remains in the 3rd gear position.

With the present embodiment as described above, when an optimum gear position determined on the basis of the running speed of the motor vehicle and the amount of accelerator opening requires a shift-up from the present gear position, the engine output for the optimum gear position and the running resistance are compared. If the running resistance is larger than the engine output, then the shift-up is inhibited. It is only if the engine output is larger than the running resistance that the gear transmission is shifted up to the optimum gear position. Since the conventional unnecessary gear shifting operation in which the gear transmission is repeatedly shifted up and down according to the normal logic while the motor vehicle is running uphill is eliminated, the running performance of the motor vehicle is improved, and the time required for the motor vehicle to run up a slope is reduced by selecting an optimum gear position taking advantage of the automatic gear transmission.

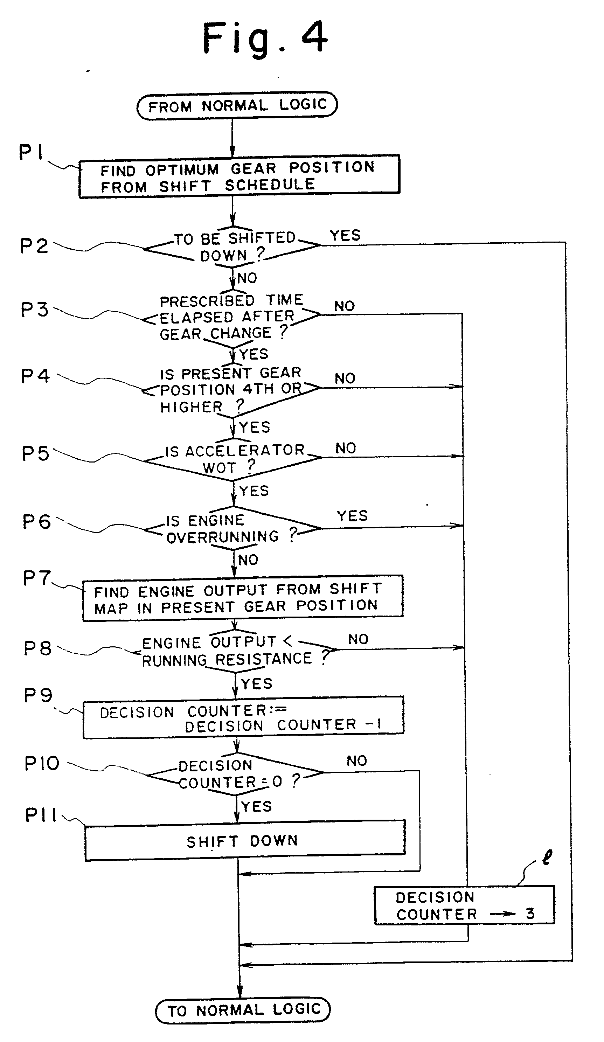

Figure 4 is a flowchart of another embodiment of transmission control logic in the control unit 2. An optimum gear position is found in a step P1 from a normal logic circuit based on a shift schedule that is determined by the vehicle speed and the amount of accelerator opening. Then a step P2 checks if the optimum gear position requires a shift-down or not of the present gear position. If "YES", i.e. if the optimum gear position requires a shift-down, then the gear transmission is shifted down to the optimum gear position according to the normal logic. This is the first case for effecting a gear shift-down with the transmission control apparatus of the present invention.

If the optimum gear position determined from the shift schedule according to the normal logic does not require a shift-down from the present gear position, i.e. if the optimum gear position is the present gear position, then the following conditions are checked:

(i) Whether or not a prescribed time has elapsed after a gear change (step P3). (This checking is needed since accurate running resistance cannot be computed because the clutch is disconnected after a gear change.)

(ii) Whether or not the present gear position is the 4th gear position or higher (step P4). (This checking is needed since a shift-down from the 3rd gear position to the 2nd gear position is not necessary.)

(iii) Whether or not the accelerator or throttle valve is in the fully open position (WOT) (step P5). (This checking is effected since no shift-down is required if a sufficient driving force is available.) If the answers to all of the above conditions (i) to (iii) are "YES", then,

(iv) whether or not the engine overruns when the gear transmission is shifted down is ascertained (step P6). If the engine does not overrun, then an optimum engine output for the present gear position is determined in a step S7 from a shift map stored in a memory in the control unit 2.

(v) Then, whether or not the running resistance for the present gear position is larger than the determined maximum engine output is checked in a step P8. For this checking step, variations in the values of the computed running resistance are eliminated by setting a decision counter to "3", and confirming whether the running resistance is larger than the maximum engine output in three successive checking cycles (steps P9 and P10). More specifically, in the first checking cycle, "1" is subtracted from the first setting "3" to obtain "2" which is held in the decision counter. Since the count is not zero, control returns to the normal logic to repeat the above sequence of checking steps (i) to (iv). If the answers to the steps (i) to (iii) are "YES" and the answer to the step (iv) is "NO", then control enters the second checking cycle in which "1" is subtracted from "2" held in the decision counter to obtain "1" which is then held in the decision counter. Since the count is not zero, control returns to the normal logic to repeat the above sequence of checking steps (i) to (iv). If the answers to the steps (i) to (iii) are "YES" and the answer to the step (iv) is "NO", then control enters the third checking cycle in which "1" is subtracted from "1" held in the decision counter to obtain "0". Therefore, the gear transmission is shifted down. As is apparent from the foregoing, the condition (v) is checked three times, and the gear transmission is shifted down in a step P11 only when the running resistance for the present gear position is larger than the engine output in the three successive checking cycles. This is the second case for a shift-down effected by the transmission control apparatus of the present invention.

The running resistance is computed from the equation described above with respect to the previous embodiment.

Consequently, when the answer to either one of the steps (i) to (iii) is "NO", or when the answer to the step (iv) is "YES" even if the answers to all of the steps (i) to (iii) are "YES", the gear transmission is not shifted down, and the value of the decision counter is reset to "3". Then control returns to the normal logic, and the above checking cycles are repeated in the aforesaid manner.

Determination and correction of the shift-down in the present apparatus will now be described in greater detail based on the running performance diagram of Figure 5. The running resistance when the motor vehicle runs at a speed V1 on a road having a gradient a% (point A) is ra, and it is assumed that the motor vehicle is running under this condition with the gear transmission in the 5th gear position, as selected by the normal logic. A maximum engine output Pa′ under this running condition (which is of a value obtained by subtracting a marginal engine output from the actual maximum engine output) for the 5th gear position is determined and compared with the running resistance ra. Since ra > Pa′ in this case, the engine does not overrun even if the gear transmission is shifted down, and the motor vehicle can run at the speed V1. The gear transmission is therefore shifted down, and the time required for the motor vehicle to run uphill is thereby reduced.

In this embodiment the gear transmission is shifted down only either (1) when a shift-down command is given by the normal logic based on a shift schedule determined by the vehicle speed and the amount of accelerator opening, or (2) when, although no shift-down command is given by the normal logic, a shift-down is to be effected dependent on the running resistance according to the following conditions:

(i) A prescribed period of time has elapsed after a gear change;
(ii) The present gear position is the 4th gear position or higher;
(iii) The accelerator or throttle valve is in the fully open position (WOT);
(iv) The engine should not overrun when the gear transmission is shifted down; and
(v) It is determined, on the basis of comparison between the engine output and the running resistance for the present gear position, that the running resistance is larger than the engine output for three successive cycles.

As described above, the embodiments of the present invention are not only such that an optimum gear position is simply selected from a shift schedule based on the vehicle speed and the amount of accelerator opening, but are arranged such that even if a gear shift-down is not commanded, the gear transmission is shifted down if the running resistance is larger than the engine output for the present gear position. Therefore, the gear transmission can be shifted at optimum timing for better vehicle running performance. Furthermore, the time required for the motor vehicle to run uphill can be reduced by selecting an optimum gear position taking advantage of the automatic gear transmission.

## Claims

1. Apparatus for controlling an automatic gear transmission (4) in a motor vehicle by commanding an optimum gear position thereof based on the speed of travel of the vehicle and the amount of accelerator opening thereof, the apparatus comprising a control circuit (2) characterised by:

   first computing means for computing an engine (5) output for the optimum gear position if the optimum gear position requires a shift-up from the present gear position;

   second computing means for computing the running resistance of the vehicle for the optimum gear position;

   comparison means for comparing the computed engine (5) output and the computed running resistance; and,

   command modifying means for inhibiting a shift-up to the optimum gear position if the running resistance is larger than the engine (5) output based on the result of the comparison effected by the comparison means.

2. Apparatus for controlling an automatic gear transmission (4) in a motor vehicle by commanding an optimum gear position thereof based on the speed of travel of the vehicle and the amount of accelerator opening thereof, the apparatus comprising a control circuit (2) characterised by:

   first computing means for computing an engine (5) output for the present gear position if the optimum gear position is the present gear position;

   second computing means for computing the running resistance of the vehicle for the present gear position;

comparison means for comparing the computed engine (5) output and the computed running resistance; and,

command modifying means for modifying the optimum gear position into a lower gear position and for commanding a shift-down if the running resistance is larger than the engine (5) output based on the result of comparison effected by the comparison means.

3.  Apparatus according to claim 2, wherein the command modifying means modifies the commanded gear position to be one gear position lower than the optimum gear position.

4.  Apparatus according to claim 2 or claim 3, comprising means for ascertaining whether a prescribed time has elapsed after a gear shift to the present gear position when the optimum gear position is the present gear position.

5.  Apparatus according to claim 2 or claim 3, comprising means for ascertaining whether the present gear position is higher than a predetermined gear position when the optimum gear position is the present gear position.

6.  Apparatus according to claim 2 or claim 3, comprising means for ascertaining whether the amount of accelerator opening corresponds to a fully-open position when the optimum gear position is the present gear position.

7.  Apparatus according to claim 2 or claim 3, comprising means for ascertaining whether the engine (5) will overrun when the gear transmission is shifted down to a commanded gear position if the optimum gear position is the present gear position.

8.  Apparatus according to claim 2 or claim 3, comprising means to determine in successive checks whether the running resistance is larger than the engine (5) output for the present gear position and to step a decision counter each time the result is positive; and, means for ascertaining whether the count of the decision counter has reached a predetermined number.

**Revendications**

1.  Dispositif de commande pour une boîte de vitesses automatique (4) d'un véhicule automobile par commande d'un rapport de vitesse optimal de celle-ci, selon la vitesse de déplacement du véhicule et le degré d'ouverture de l'accélérateur, le dispositif comprenant un circuit de commande (2) caractérisé par :

des premiers moyens de calcul destinés à calculer un effort de sortie du moteur (5) pour le rapport de vitesse optimal si le rapport optimal requiert un passage au rapport supérieur à partir du rapport actuellement engagé ;

des deuxièmes moyens de calcul destinés à calculer la résistance à l'avancement du véhicule pour le rapport de vitesse optimal ;

des moyens de comparaison destinés à comparer l'effort de sortie calculé du moteur à la résistance à l'avancement calculée ; et,

des moyens de modification de commande destinés à empêcher le passage en montant au rapport optimal si la résistance à l'avancement est supérieure à l'effort de sortie du moteur (5), en fonction du résultat de la comparaison effectuée par les moyens de comparaison.

2.  Dispositif de commande pour une boîte de vitesses automatique (4) d'un véhicule automobile par commande d'un rapport de vitesse optimal de celle-ci, selon la vitesse de déplacement du véhicule et le degré d'ouverture de l'accélérateur, le dispositif comprenant un circuit de commande (2) caractérisé par :

des premiers moyens de calcul destinés à calculer un effort de sortie du moteur (5) pour le rapport de vitesse engagé si le rapport optimal est celui actuellement engagé ;

des deuxièmes moyens de calcul destinés à calculer la résistance à l'avancement du véhicule pour le rapport de vitesse engagé ;

des moyens de comparaison destinés à comparer l'effort de sortie calculé du moteur (5) à la résistance à l'avancement calculée ; et,

# EP 0 238 310 B1

des moyens de modification de commande destinés à modifier le rapport de vitesse optimal par rétrogradation à un rapport de vitesse inférieur et destinés à commander une rétrogradation si la résistance à l'avancement est supérieure à l'effort de sortie du moteur (5) selon le résultat de la comparaison effectuée par les moyens de comparaison.

3. Dispositif selon la revendication 2, dans lequel les moyens de modification de commande modifient le rapport de vitesse commandé pour l'amener à un rapport inférieur au rapport optimal.

4. Dispositif selon la revendication 2 ou la revendication 3, comprenant des moyens nécessaires destinés à déterminer si un laps de temps prescrit s'est écoulé depuis le passage au rapport de vitesse engagé quand le rapport de vitesse optimal est le rapport actuellement engagé.

5. Dispositif selon la revendication 2 ou la revendication 3, comprenant des moyens nécessaires destinés à déterminer si le rapport de vitesse engagé est supérieur à un rapport prédéterminé quand le rapport de vitesse optimal est le rapport de vitesse actuellement engagé.

6. Dispositif selon la revendication 2 ou la revendication 3, comprenant des moyens destinés à déterminer si le degré d'ouverture de l'accélérateur est en position complètement ouverte quand le rapport de vitesse optimal est le rapport de vitesse actuellement engagé.

7. Dispositif selon la revendication 2 ou la revendication 3, comprenant des moyens destinés à déterminer si le moteur (5) passera en survitesse si la boîte de vitesses rétrograde vers un rapport de vitesse commandé lorsque le rapport de vitesse optimal est le rapport de vitesse engagé.

8. Dispositif selon la revendication 2 ou la revendication 3, comprenant des moyens destinés à déterminer par des vérifications successives si la résistance à l'avancement est supérieure à l'effort de sortie du moteur (5) pour le rapport de vitesse engagé, et à faire avancer d'un pas un compteur de décision chaque fois que le résultat est positif ; et des moyens permettant de déterminer si le contenu du compteur de décision a atteint un nombre prédéterminé.

**Patentansprüche**

1. Gerät zur Steuerung eines Automatikgetriebes (4) in einem Kraftfahrzeug durch Befehlen einer optimalen Gangposition auf der Grundlage der Fahrzeuggeschwindigkeit und des Betrages der Fahrpedalbetätigung, das einen Steuerkreis (2) umfaßt und gekennzeichnet ist durch:
erste Berechnungsmittel zur Berechnung einer Leistung des Motors (5) für die optimale Gangposition, wenn die optimale Gangposition ein Aufwärtsschalten aus der derzeitigen Gangposition erfordert;
zweite Berechnungsmittel zur Berechnung des Fahrwiderstandes des Fahrzeuges für die optimale Gangposition;
Vergleichsmittel zum Vergleichen der berechneten Leistung des Motors (5) und dem berechneten Fahrwiderstand und
Mittel zur Abänderung des Befehles zur Verhinderung einer Aufwärtsschaltung in die optimale Gangposition, wenn der Fahrwiderstand größer als die Leistung des Motors (5) auf der Grundlage des Ergebnisses des Vergleiches ist, der durch die Vergleichsmittel durchgeführt worden ist.

2. Gerät zur Steuerung eines Automatikgetriebes (4) in einem Kraftfahrzeug durch Befehlen einer optimalen Gangposition auf der Grundlage der Fahrzeuggeschwindigkeit und des Betrages der Fahrpedalbetätigung, das einen Steuerkreis (2) umfaßt und gekennzeichnet ist durch:
erste Berechnungsmittel zur Berechnung einer Leistung des Motors (5) für die derzeitige Gangposition, wenn die optimale Gangposition die derzeitige Gangposition ist,
zweite Berechnungsmittel zur Berechnung des Fahrwiderstandes des Fahrzeuges für die derzeitige Gangposition,
Vergleichsmittel zum Vergleichen der berechneten Leistung des Motors (5) und dem berechneten Fahrwiderstand und
Mittel zur Beeinflussung des Befehles zur Abänderung der optimalen Gangposition in eine niedrigere Gangposition und zum Befehlen eines Abwärtsschaltvorganges, wenn der Fahrwiderstand größer als die Leistung des Motors (5) auf der Grundlage des Ergebnisses des Vergleiches ist, der durch die Vergleichsmittel angestellt worden ist.

7

3. Gerät nach Anspruch 2, bei dem die Mittel zur Beeinflussung des Befehls die befohlene Gangposition in der Weise abändern, daß sie eine geringere Position ist als die optimale Gangposition.

4. Gerät nach Anspruch 2 oder 3, das Mittel zur Feststellung umfaßt, ob eine vorgegebene Zeit nach einem Gangwechsel in die derzeitige Gangposition abgelaufen ist, wenn die optimale Gangposition die derzeitige Gangposition ist.

5. Gerät nach Anspruch 2 oder 3, das Mittel zur Feststellung umfaßt, ob die derzeitige Gangposition höher ist als eine vorgegebene Gangposition, wenn die optimale Gangposition die derzeitige Gangposition ist.

6. Gerät nach Anspruch 2 oder 3, das Mittel zur Feststellung umfaßt, ob der Betrag der Betätigung des Fahrpedales der vollen Betätigung entspricht, wenn die optimale Gangposition die derzeitige Gangposition ist.

7. Gerät nach Anspruch 2 oder 3, das Mittel zur Feststellung umfaßt, ob der Motor (5) im Schiebebetrieb arbeitet, wenn das Getriebe abwärts in eine befohlene Gangposition geschaltet wird, wenn die optimale Gangposition die derzeitige Gangposition ist.

8. Gerät nach Anspruch 2 oder 3, das Mittel zur Feststellung in aufeinanderfolgenden Überprüfungen umfaßt, ob der Fahrwiderstand größer als die Leistung des Motors (5) für die derzeitige Gangposition ist, und zur Stufenschaltung eines Entscheidungsschalters jedesmal dann, wenn das Ergebnis positiv ist, sowie Mittel zur Feststellung, ob die Zählung des Entscheidungszählers eine vorgegebene Ziffer erreicht hat.

# Fig. 1

VEHICLE SPEED

AMOUNT OF
ACCELERATOR
PEDAL
DEPRESSION

CLUTCH
STROKE

GEAR
POSITION

SHIFT
MAP    1

CONTROL
UNIT    2

VEHICLE LOAD

ENGINE
ROTATIONAL SPEED

HYDRAULIC
ACTUATOR    3

GEAR
TRANSMISSION    4

ENGINE    5

# Fig. 2

```
         ( FROM  NORMAL  LOGIC )
                     │
                     ▼
S1 ┌──────────────────────────────────┐
   │   FIND  OPTIMUM  GEAR  POSITION   │
   │   FROM  SHIFT  SCHEDULE           │
   └──────────────────────────────────┘
                     │
                     ▼
S2          ◇ TO BE SHIFTED ◇          NO
              UP  ?       ─────────────────┐
                     │                     │
                    YES                    │
                     ▼                     │
S3 ┌──────────────────────────────────┐   │
   │ FIND ENGINE OUTPUT FROM SHIFT MAP FOR │
   │ GEAR POSITION TO BE SHIFTED UP TO │   │
   └──────────────────────────────────┘   │
                     │                     │
                     ▼                     │
S4      ◇ ENGINE OUTPUT< ◇        NO       │
          RUNNING RESISTANCE  ? ──────────►│
                     │                     │
                    YES                    │
                     ▼                     │
S5 ┌──────────────────────────────────┐   │
   │      INHIBIT  SHIFT - UP          │   │
   └──────────────────────────────────┘   │
                     │◄────────────────────┘
                     ▼
            ( TO NORMAL LOGIC )
```

# Fig.3

RUNNING PERFORMANCE GRAPH

# Fig.5

RUNNING PERFORMANCE GRAPH

# Fig. 4

```
                    ( FROM NORMAL LOGIC )
                              │
   P1 ┌────────────────────────────────────────┐
      │ FIND OPTIMUM GEAR POSITION              │
      │ FROM SHIFT SCHEDULE                     │
      └────────────────────────────────────────┘
                              │
   P2          ◇ TO BE SHIFTED ◇ ───── YES ──────────────────┐
                    DOWN ?                                    │
                      │ NO                                    │
   P3          ◇ PRESCRIBED TIME ◇ ───── NO ──────────────┐  │
                  ELAPSED AFTER                            │  │
                  GEAR CHANGE ?                            │  │
                      │ YES                                │  │
   P4          ◇ IS PRESENT GEAR ◇ ───── NO ─────────────┐│  │
                  POSITION 4TH OR                         ││  │
                    HIGHER ?                              ││  │
                      │ YES                               ││  │
   P5          ◇ IS ACCELERATOR ◇ ───── NO ──────────────┤│  │
                    WOT ?                                 ││  │
                      │ YES                               ││  │
   P6          ◇ IS ENGINE ◇ ───── YES ─────────────────┐││  │
                  OVERRUNNING ?                          │││  │
                      │ NO                               │││  │
   P7 ┌────────────────────────────────────────┐        │││  │
      │ FIND ENGINE OUTPUT FROM SHIFT           │        │││  │
      │ MAP IN PRESENT GEAR POSITION            │        │││  │
      └────────────────────────────────────────┘        │││  │
                      │                                  │││  │
   P8          ◇ ENGINE OUTPUT < ◇ ───── NO ────────────┤││  │
                  RUNNING RESISTANCE ?                   │││  │
                      │ YES                              │││  │
   P9 ┌────────────────────────────────────────┐        │││  │
      │ DECISION COUNTER :=                     │        │││  │
      │     DECISION COUNTER -1                 │        │││  │
      └────────────────────────────────────────┘        │││  │
                      │                                  │││  │
   P10         ◇ DECISION ◇ ───── NO ──────────┐        │││  │
                COUNTER = 0 ?                   │        │││  │
                      │ YES                     │        │││  │
   P11┌────────────────────────────────────────┐│        │││  │
      │ SHIFT DOWN                              ││        │││  │
      └────────────────────────────────────────┘│        │││  │
                      │                          │   ℓ    │││  │
                      │        ┌─────────────────┴─────┐  │││  │
                      │        │ DECISION              │  │││  │
                      │        │ COUNTER → 3           │  │││  │
                      │        └───────────────────────┘  │││  │
                      │                                    │││  │
                    ( TO NORMAL LOGIC )
```

EP 0 238 310 B1

# Fig. 6

AMOUNT OF ACCELERATOR OPENING

FULL

2 3 4 5

3 4 5 6

IDLING

VEICHICLE SPEED km/H

SHIFT SCHEDULE

SOLID LINE : SHIFTED UP

DOTTED LINE : SHIFTED DOWN

# Fig. 7

6TH 5TH 6TH 4TH 3RD 6TH 4TH

13